# EUROPEAN PATENT APPLICATION

(11) **EP 4 694 032 A1**
(43) Date of publication of application: **11.02.2026**
(21) Application number: 23951770.9
(22) Date of filing: 12.09.2023
(51) Int. Cl.: H04L 9/40, H04L 45/745

(54) **SECURITY TABLE ENTRY GENERATION METHOD AND APPARATUS, NETWORK DEVICE, AND STORAGE MEDIUM**

(71) Applicant: New H3C Technologies Co., Ltd., Hangzhou, Zhejiang 310052 (CN)
(72) Inventor: LIN, Changwang, Beijing 100102 (CN)
(74) Representative: IPAZ
(86) International application number: PCT/CN2023/118377
(87) International publication number: WO 2025/054829

(57) **Abstract**

The present application relates to the technical field of network communications, and provides a security table entry generation method and apparatus, a network device, and a storage medium. The method comprises: acquiring target link state information from a link state database, the target link state information comprising a first source prefix; and generating a security table entry for an ingress interface, the security table entry comprising the identifier of the ingress interface and the first source prefix. The present application can improve the network security.

## Description

### TECHNICAL FIELD

The present application relates to the technical field of network communication, in particular to a method and an apparatus for generating a security table entry, a network device, and a storage medium.

### BACKGROUND

In a communication network, a network device forwards a packet based on the destination address of the packet. However, an attacker may attack the network by forging a source address, resulting in a large number of network security problems.

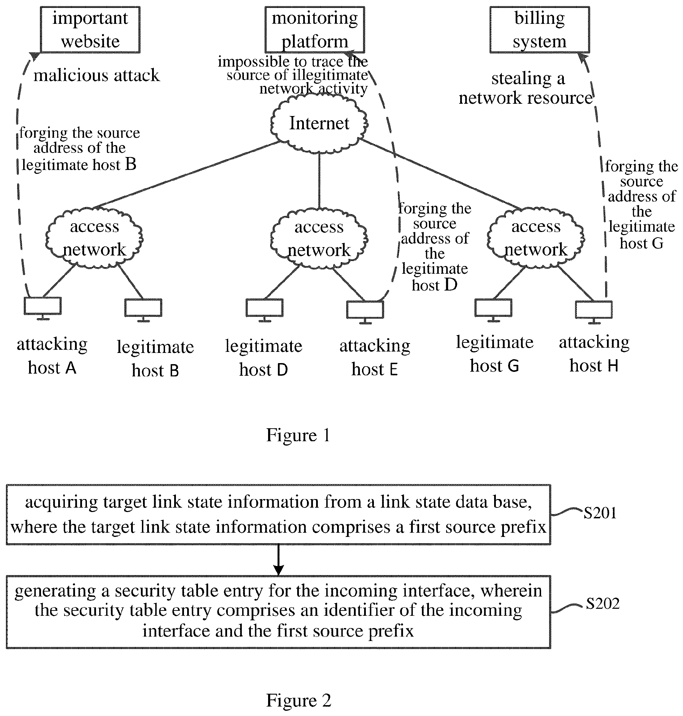

As shown in Figure 1, each host can access the Internet through the access network. For example, attacking host A can forge the source address of legitimate host B and conduct a malicious attack on an important website, causing the important website inaccessible and interfering with an important service of a legitimate user. Attacking host E can forge the source address of legitimate host D to access the Internet to conduct an illegitimate network activity, and the attacker can hide the true identity and location thereof, making it impossible for the monitoring platform to trace the source of the illegitimate network activity. For another example, attacking host H can forge the source address of legitimate host G and steal a network resource of the legitimate host G, thereby interfering with billing, managing and security authenticating of the real source address by billing system, resulting in a large number of network resources to be stolen.

### SUMMARY

The object of an example of the present application is to provide a method, an apparatus for generating a security table entry, a network device, and a storage medium for improving network security. The specific technical solutions are as follows.

In a first aspect, the examples of the present application provide a method for generating a security table entry, which is applied to a first network device, wherein the first network device comprises a first interface, and the first interface is an incoming interface for receiving target link state information, the method comprises:
acquiring the target link state information from a link state data base, wherein the target link state information comprises a first source prefix;
generating a security table entry for the incoming interface, wherein the security table entry comprises an identifier of the incoming interface and the first source prefix.

In a possible example, acquiring the target link state information from a link state data base comprises:
searching for first link state information of the first network device from the link state data base, wherein the first link state information comprises a connection relationship between the first network device and at least one network device of a next level ;
setting the next level as a current traverse level, and for each network device at the current traverse level, searching for the second link state information of the network device from the link state data base;
if the second link state information comprises a source prefix, setting the second link state information as the target link state information;
if the second link state information comprises a connection relationship between the network device and at least one network device of a next level, setting the next level as the current traverse level;
repeating a process of, for each network device at the current traverse level, searching for second link state information of the network device from the link state data base, if the second link state information comprises the source prefix, setting the second link state information as the target link state information, if the second link state information comprises a connection relationship between the network device and at least one network device of a next level, setting the next level as the current traverse level, until it is determined that there is no network device of a next level for the network device at the current traverse level.

In a possible example, the network device of a next level is a network device other than the first network device in an AS domain.

In a possible example, the target link state information further comprises an access tag corresponding to the first source prefix; after generating a security table entry for the incoming interface, the method further comprise:
searching for third link state information comprising the access tag from the link state data base, wherein the third link state information comprises a second source prefix corresponding to the access tag;
adding the second source prefix to the security table entry.

In a possible example, the incoming interface is configured with an access tag; the method further comprises:
searching for fourth link state information comprising the access tag from the link state data base, wherein the fourth link state information comprises a third source prefix corresponding to the access tag;
generating, for the incoming interface, a security table entry comprising an identifier of the incoming interface and the third source prefix.

In a possible example, before acquiring the target link state information from a link state data base, the method further comprises:
receiving a first packet sent by a network device in an AS domain, wherein the first packet comprises the target link state information;
storing the target link state information in the link state data base.

In a possible example,
the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises s second flag bit, and the second flag bit is to indicate that the address prefix comprised in the second TLV is the first source prefix; or,
the first packet comprises a third TLV comprising the first source prefix.

In a possible example, each of the first TLV, the second TLV and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

In a second aspect, an example of the present application provide an apparatus for generating a security table entry, which is applied to a first network device, wherein the first network device comprises a first interface, and the first interface is an incoming interface for receiving target link state information, the apparatus comprises:
an acquiring module, to acquire the target link state information from a link state data base, wherein the target link state information comprises a first source prefix;
a generating module, to generate a security table entry for an incoming interface, wherein the security table entry comprises an identifier of the incoming interface and the first source prefix.

In a possible example, the acquiring module is specifically to:
search for first link state information of the first network device from the link state data base, wherein the first link state information comprises a connection relationship between the first network device and at least one network device of a next level ;
set the next level as the current traverse level, and for each network device at the current traverse level, search for second link state information of the network device from the link state data base;
if the second link state information comprises a source prefix, set the second link state information as the target link state information;
if the second link state information comprises a connection relationship between the network device and at least one network device of a next level, set the next level as the current traverse level;
repeat a process of, for each network device at the current traverse level, search for second link state information of the network device from the link state data base, if the second link state information comprises the source prefix, set the second link state information as the target link state information, if the second link state information comprises a connection relationship between the network device and at least one network device of a next level, set the next level as the current traverse level, until it is determined that there is no network device of a next level for the network device at the current traverse level.

In a possible example, the network device of a next level is a network device other than the first network device in an AS domain.

In a possible example, the target link state information further comprises an access tag corresponding to the first source prefix;
the acquiring module is further to search for third link state information comprising the access tag from the link state data base, wherein the third link state information comprises a second source prefix corresponding to the access tag;
the generating module is further to add the second source prefix to the security table entry.

In a possible example, the incoming interface is configured with an access tag;
the acquiring module is further to search for fourth link state information comprising the access tag from the link state data base, wherein the fourth link state information comprises a third source prefix corresponding to the access tag;
the generating module is further to generate, for the incoming interface, a security table entry comprising an identifier of the incoming interface and the third source prefix.

In a possible example, the apparatus further comprises:
a receiving module, to receive a first packet sent by a network device in an AS domain, wherein the first packet comprises the target link state information;
a storing module, to store the target link state information in the link state data base.

In a possible example, the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises s second flag bit, and the second flag bit is to indicate that the address prefix comprised in the second TLV is the first source prefix; or,
the first packet comprises a third TLV comprising the first source prefix.

In a possible example, each of the first TLV, the second TLV, and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

In a third aspect, the examples of the present application provide a first network device, wherein the first network device comprises a first interface, the first interface is an incoming interface for receiving target link state information, and the first network device comprises:
a processor;
a transceiver;
a machine-readable storage medium, which stores machine-executable instructions that are executed by the processor to cause the processor to:
   acquire the target link state information from a link state data base, wherein the target link state information comprises a first source prefix;
   generate a security table entry for the incoming interface, wherein the security table entry comprises an identifier of the incoming interface and the first source prefix.

In a possible example, the machine-executable instructions further cause the processor to:
search for first link state information of the first network device from the link state data base, wherein the first link state information comprises a connection relationship between the first network device and at least one network device of a next level;
set the next level as the current traverse level, and for each network device at the current traverse level, search for second link state information of the network device from the link state data base;
if the second link state information comprises a source prefix, set the second link state information as the target link state information;
if the second link state information comprises a connection relationship between the network device and at least one network device of a next level, set the next level as the current traverse level;
repeat a process of, for each network device at the current traverse level, search for second link state information of the network device from the link state data base, if the second link state information comprises the source prefix, set the second link state information as the target link state information, if the second link state information comprises a connection relationship between the network device and at least one network device of a next level, set the next level as the current traverse level, until it is determined that there is no network device of a next level for the network device at the current traverse level.

In a possible example, the network device of a next level is a network device other than the first network device in an AS domain.

In a possible example, the target link state information further comprises an access tag corresponding to the first source prefix;
the machine-executable instructions further cause the processor to:
search for third link state information comprising the access tag from the link state data base, wherein the third link state information comprises a second source prefix corresponding to the access tag;
add the second source prefix to the security table entry.

In a possible example, the incoming interface is configured with an access tag; the machine executable instructions further cause the processor to:
search for fourth link state information comprising the access tag from the link state data base, wherein the fourth link state information comprises a third source prefix corresponding to the access tag;
generate, for the incoming interface, a security table entry comprising an identifier of the incoming interface and the third source prefix.

In a possible example, the machine-executable instructions further cause the processor to:
receive a first packet sent by a network device in an AS domain, wherein the first packet comprises the target link state information;
store the target link state information in the link state data base.

In a possible example, the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises s second flag bit, and the second flag bit is to indicate that the address prefix comprised in the second TLV is the first source prefix; or,
the first packet comprises a third TLV comprising the first source prefix.

In a possible example, each of the first TLV, the second TLV, and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

In a fourth aspect, an example of the present application provides a machine-readable storage medium, which stores machine-executable instructions that, when called and executed by a processor, cause the processor to implement the method described in the first aspect.

In a fifth aspect, an example of the present application provides a computer program product, which causes a processor to implement the method described in the first aspect.

With the above technical solution, the first network device can acquire the target link state information from the link state data base. Since the first interface as an the incoming interface for receiving the target link state information represents that the packet carrying the first source prefix will access the first network device through the incoming interface subsequently, the first network device can generate a security table entry comprising an identifier of the incoming interface and the first source prefix, and subsequently, the incoming interface and the source prefix for the packet can be validated based on the security table entry, so that a packet forging the IP address can be identified, avoiding a network resource misused, and improving network security.

### BRIEF DESCRIPTION OF THE DRAWINGS

The drawings described here provide a further understanding of and constitute a part of the present application. The schematic examples and descriptions of the present application are used to explain and do not constitute an improper limitation on the present disclosure.
Figure 1 is an exemplary schematic diagram of the process of attacking a network by an attacking host in the prior art;
Figure 2 is a flow chart of a method for generating a security table entry provided by an example of the present application;
Figure 3 is a diagram of a network topology in an AS domain provided by an example of the present application;
Figure 4 is an exemplary schematic diagram of a security verification scenario for intra-domain egress traffic provided by an example of the present application;
Figure 5 is an exemplary schematic diagram of a security verification scenario for extra-domain attack traffic provided by an example of the present application;
Figure 6 is a diagram of another network topology in an AS domain provided by an example of the present application;
Figure 7 is a schematic diagram of an ISIS prefix TLV provided by an example of the present application;
Figure 8 is a schematic diagram of an OSPFv2 external prefix TLV provided by an example of the present application;
Figure 9 is a schematic diagram of a Sub-TLV provided by an example of the present application;
Figure 10 is a schematic diagram of another Sub-TLV provided by an example of the present application;
Figure 11 is a schematic diagram of a third TLV in an IS-IS protocol provided by an example of the present application;
Figure 12 is a schematic diagram of an LSA in an OSPFv2 protocol provided by an example of the present application;
Figure 13 is a schematic diagram of a third TLV in an OSPFv2 protocol provided by an example of the present application;
Figure 14 is a schematic diagram of an LSA in an OSPFv3 protocol provided by an example of the present application;
Figure 15 is a schematic diagram of a third TLV in the OSPFv3 protocol provided by an example of the present application;
Figure 16 is a schematic structural diagram of an apparatus for generating a security table entry provided by an example of the present application;
Figure 17 is a schematic structural diagram of an electronic device provided by an example of the present application.

### DETAILED DESCRIPTION

In order to make the objective, technical solutions and advantages of the present application clearer and more understandable, the present application will be described in more detail below with reference to the accompanying drawings and examples. Obviously, the described examples are only some, and not all, of the examples of the present application. All other examples obtained based on the examples of the present application by those skilled in the art fall into the scope of protection of the present application.

In order to improve network security, an example of the present application provides a method for generating a security table entry, which is applied to a first network device, wherein the first network device can be any network device in an autonomous system (AS) domain that enables Source Address Validation in Intra-domain and Inter-domain Networks (SAVNET). The first network device comprises a first interface, wherein the first interface is an incoming interface for receiving target link state information. As shown in Figure 2, the method comprises:
S201, acquiring target link state information from a link state data base, wherein the target link state information comprises a first source prefix.

It can be understood that there is a communicating path between the network device distributing the target link state information and the incoming interface of the first network device.

Wherein the link state data base is a link state data base (LSDB) in the first network device, and the link state data base stores the link state information advertised by each network device in the AS domain through an Interior Gateway Protocol (IGP).

In the case that the IGP is an intermediate system to intermediate system (IS-IS) protocol, the link state information is LSP; in the case that the IGP is an Open Shortest Path First (OSPF) protocol, the link state information is LSA.

S202, generating a security table entry for an incoming interface, wherein the security table entry comprises an identifier of the incoming interface and the first source prefix.

Wherein the security table entry is to perform security validation on a packet received from the incoming interface.

If a source IP address of the packet received from the incoming interface matches the first source prefix in the security table entry, it can be determined that the packet is a legitimate packet, and the packet can be permitted;
If the source IP address of the packet received from the incoming interface does not match the first source prefix in the security table entry, it can be determined that the packet is a packet forging other source IP address, and the packet would be intercepted.

It should be noted that if the first network device found multiple target link state information, the first network device could add the source prefix comprised in each target link state information into the security table entry.

Wherein, the S201-S202 can be specifically executed by a SAVNET AGENT module in the first network device, that is, the SAVNET AGENT can generate the security table entry with the LSDB information of SAVNET.

With this method, the first network device can acquire the target link state information from the link state data base. The first interface as an incoming interface for receiving the target link state information represents that the packet carrying the first source prefix access the first network device through the incoming interface. Therefore, the first network device can generate a security table entry comprising an identifier of the incoming interface and the first source prefix. Subsequently, the incoming interface of the packet and the source prefix can be validated based on the security table entry, so that a packet forging the source IP address can be identified, avoiding the network resource misused, and improving network security.

In an example of the present application, the above-mentioned S201, acquiring target link state information from a link state data base, may specifically be implemented as:
Block 1: searching for first link state information of the first network device from the link state data base.

Wherein, the first link state information comprises the connection relationship between the first network device and at least one network device of a next level.

Each network device in the examples of the present application is an IGP node, and the network device can be identified through an IGP ID. For the IS-IS protocol, the IGP ID is a system ID and level of the network device. For the OSPF protocol, the IGP ID is a routing ID and an area where the network device is located.

The connection relationship between network devices can be identified through a local address, a peer address, a local IGP ID, and a peer IGP ID.

It should be noted that after determining the network device of a next level based on the first link state information, the first network device further needs to reversely search whether the network device of a next level has a link directing to the first network device, that is, search whether the link state information of the network device of a next level comprises the connection relationship with the first network device. When there is a bidirectional link between the first network device and the network device of a next level, it can be determined that it is communicated between the first network device and the network device of a next level, and then the network device of a next level can be traverse.

In different protocols, the connection relationship is expressed in different ways in the link state information, wherein the specific expression way may follow the relevant protocol provisions, which is not limited in the examples of the present application.

It is assumed that two incoming interfaces of the first network device are connected to network devices A and B respectively, and the devices A and B are network device of a next level s of the first network device.

Block 2: setting the next level as a current traverse level.

Block 3: for each network device at the current traverse level, searching for second link state information of the network device from the link state data base.

Block 4: if the second link state information comprises a source prefix, setting the second link state information as target link state information.

Wherein, if the second link state information comprises a source prefix, a security table entry comprising the source prefix and an identifier of the incoming interface may be generated subsequently.

As an example, if the network devices at the current level comprise network devices A and B, the second link state information of the network device A comprises a source prefix P1, and the second link state information of the network device B comprises a source prefix P2, then
if the network devices A and B each has a communicating path with an interface 1 of the first network device, a security table entry comprising the interface 1 and the source prefixes P1 and P2 may be generated subsequently,
or, if the network device A has a communicating path with the interface 1 of the first network device, and the network device B has a communicating path with an interface 2 of the first network device, a security table entry comprising the interface 1 and the source prefix P1 may be generated for the interface 1, and a security table entry comprising the interface 2 and the source prefix P2 for the interface 2 subsequently.

Block 5: if the second link state information comprises the connection relationship between the network device and at least one network device of a next level, setting the next level as the current traverse level.

Block 6: Repeating blocks 3 to 5, until it is determined that there is no network device of a next level for the network device at the current traverse level.

It should be noted that the network device of the next level determined each time in the above blocks is a network device other than the first network device, to avoid repeated traversing.

Wherein, the network devices at each level that have a communicating path with the first network device in the AS domain can be traversed according to blocks 3 to 5, so that the incoming interface in the first network device corresponding to each of the source prefixes learned by the network devices in the AS domain can be found, so that a security table entry can be generated for each incoming interface to improve network security.

Moreover, with this method, each network device can automatically generate a security table entry based on the link state data base. Compared with the way of manual ACL rule, the process of generating a security table entry in the examples of the present application does not require manual participation, and the network device can automatically adjust the security table entry based on the changes of the network topology in time, thereby effectively achieving security protection for an intra-domain source address.

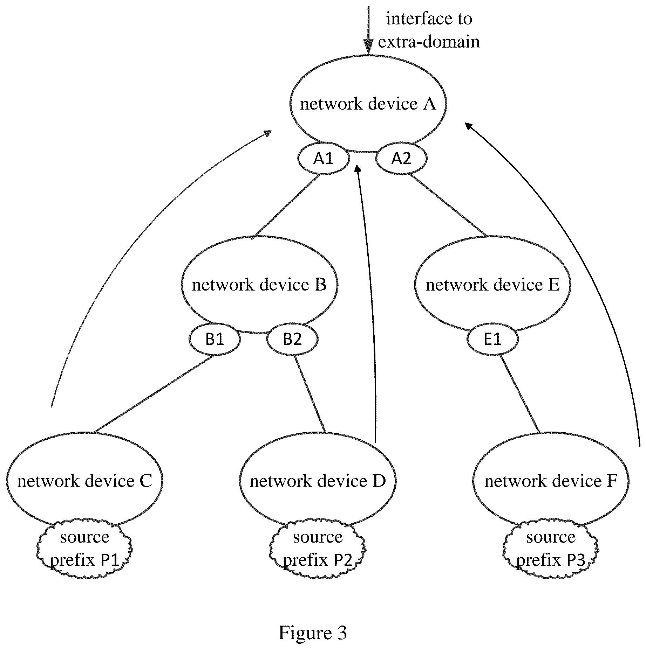

The process of generating a security table entry is described below with reference to a specific example, as shown in Figure 3. Figure 3 exemplarily shows six network devices comprised in an AS domain, namely network devices A to F.

Wherein, the network device A has incoming interfaces A1 and A2 as well as an extra-domain interface connecting to extra-domain, the network device B has incoming interfaces B1 and B2, and the network device E has an incoming interface E1.

The network device C has learned the source prefix P1, the network device D has learned the source prefix P2, and the network device F has learned the source prefix P3.

It is assumed that the network devices A, B, and E have all enabled a SAVNET function. The following describes the methods for generating a security table entry for the network devices A, B, and E respectively.

For the network device A, the network device A finds its own LSA1 from the LSDB. The LSA1 comprises connection information between the network device A and the network device B, as well as connection information between the network device A and the network device E. That is, the network devices of the next level comprise the network devices B and E.

Then the network device A searches for an LSA2 of the network device B from the LSDB, and searches for an LSA3 of the network device E. The LSA2 comprises connection information between the network device B and the network device C, as well as connection information between the network device B and the network device D. The LSA3 comprises connection information between the network device E and the network device F. Neither the LSA2 nor the LSA3 comprises the source prefix. It can be seen that the network device of a next level s comprise the network devices C, D and F.

Then the network device searches for an LSA4 of the network device C, an LSA5 of the network device D, and an LSA6 of the network device F from the LSDB.

Wherein, the LSA4 comprises a source prefix P1. The network device A can determine that an incoming interface corresponding to the source prefix P1 in the network device A is A1 according to a communication link C->B->A, and further generates a security table entry comprising P1 and A1.

The LSA5 comprises a source prefix P2. The network device A can determine that an incoming interface corresponding to the source prefix P2 in the network device A is A1 according to a communication link D->B->A, and further generates a security table entry comprising P2 and A1.

The LSA6 comprises a source prefix P3. The network device A can determine that an incoming interface corresponding to the source prefix P2 in the network device A is A2 according to a communication link F->E->A, and further generates a security table entry comprising P2 and A2.

Since there is no network device of a next level for the network devices C, D, and F, the traversing ends, and the security table entries generated by the network device A are shown in Table 1.

**Table 1**

| Source Prefix | Incoming Interface |
|---|---|
| P1,P2 | A1 |
| P3 | A2 |

The network devices B and E generate security table entries in the same way, the security table entries generated by the network device B are shown in Table 2, and the security table entry generated by the network device E is shown in Table 3.

**Table 2**

| Source Prefix | Incoming Interface |
|---|---|
| P1 | B1 |
| P2 | B2 |

**Table 3**

| Source Prefix | Incoming Interface |
|---|---|
| P3 | E1 |

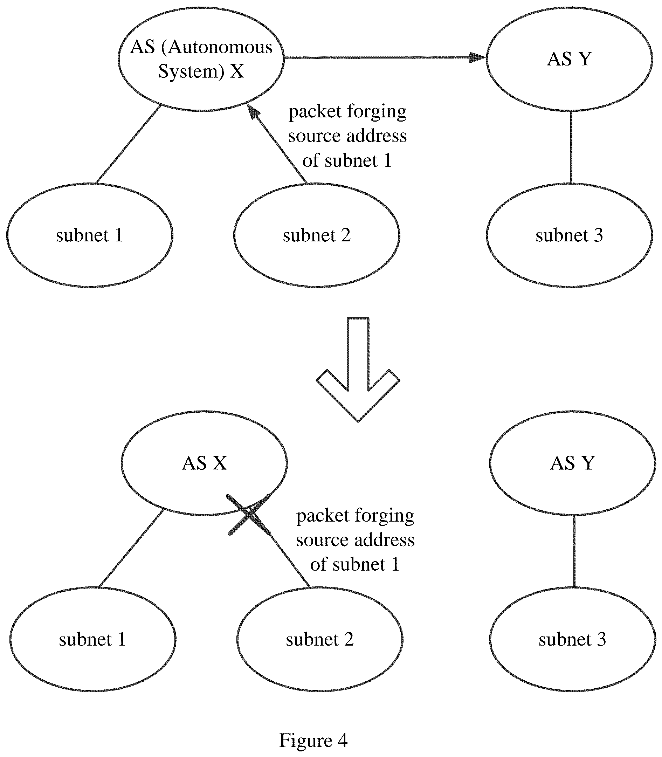

The above security table entries can be applied to the security verification scenario of intra-domain egress traffic. As shown in Figure 4, Figure 4 shows two AS domains, namely an AS X and an AS Y. If a subnet 2 sends a packet that forges the source address of a subnet 1 to the AS X, the destination address of the packet being the address of a subnet 3, according to the present principle of packet forwarding based on the destination address, the packet will be forwarded by the AS X to the AS Y, which represents the subnet 2 forges the source address of the subnet 1. With the method of the example of the present application, the network device in the AS X can verify the packet based on the security table entry and intercept the packet to prevent the packet from being forwarded to the AS Y.

Specifically, if a lowest-level network device in the AS domain sends a packet that forges the source address, the packet will be intercepted by the upper-level network device closest to the lowest-level network device.

Taking Figure 3 as an example, if the network device B receives a packet sent by the network device C through the interface B1, it acquires a source address of the packet, based on Table 2, and if the source address of the packet does not match the source prefix P1, the packet will be intercepted.

Similarly, if the network device B receives a packet sent by the network device C through the interface B2, based on Table 2, if the source address of the packet does not match the source prefix P2, the packet will be intercepted.

In this way, the authenticity of the source address is validated, and the network device is prevented from forwarding a packet that forges the source address, thereby improving network security.

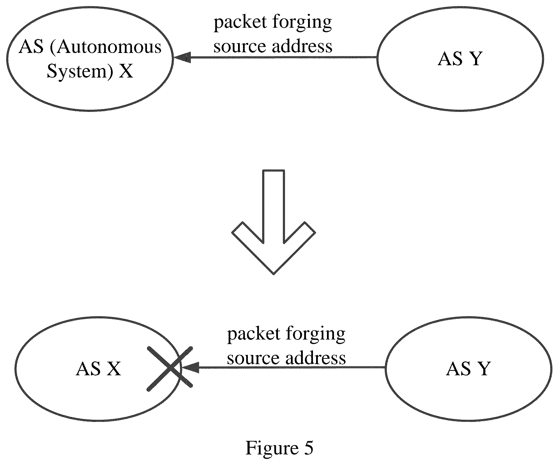

The above security table entry can be applied to a security verification scenario of extra-domain attacking traffic. As shown in Figure 5, Figure 5 shows two AS domains, namely an AS X and an AS Y. If the AS X receives a packet that forges the source address in an AS domain sent by the AS Y, the packet will be intercepted by AS X with the method of the example of the present application.

Still taking Figure 3 as an example, if the network device A receives a packet from an interface connected to extra-domain, assuming that an address prefix of a source address of the packet is a source prefix P1, then the network device can search whether there is a security table entry comprising the interface and the source prefix P1 from the security table entries shown in Table 1, if not, it means that the packet is an attacking packet that forges the source address in the domain, and the packet will be intercepted.

In some examples of the present application, the above target link state information further comprises an access tag corresponding to the first source prefix. After the above S202, generating a security table entry for an incoming interface, the method further comprises:
searching for third link state information comprising the access tag from the link state data base, wherein the third link state information comprises a second source prefix corresponding to the access tag, and adding the second source prefix comprised in the third link state information to the security table entry.

Wherein, for the scenario where a subnet has multi-homing access to the AS domain, one subnet can comprise multiple source prefixes. In the example of the present application, the same access tag can be set for the source prefixes of the same subnet, so that adding multiple source prefixes of the same subnet to the security table entry corresponding to the same incoming interface of the first network device can avoid an erroneous interception of subnet traffic with multi-homing access.

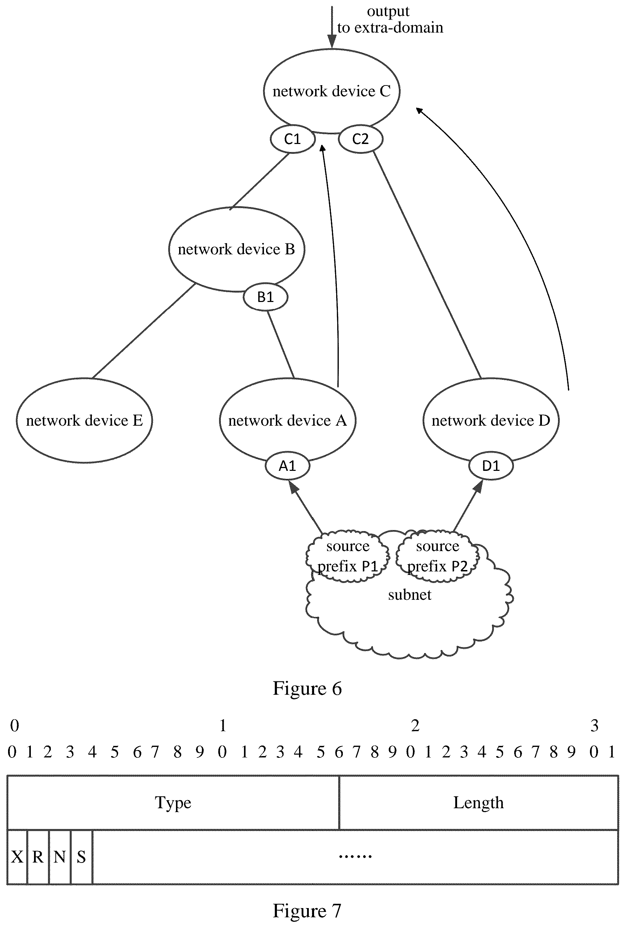

As shown in Figure 6, Figure 6 exemplarily shows five network devices comprised in an AS domain, which are network devices A to E respectively.

Wherein, the network device C has incoming interfaces C1 and C2, the network device B has an incoming interface B1, the network device A has an incoming interface A1, and the network device D has an incoming interface D1.

The network device A has learned a source prefix P1, and the network device D has learned a source prefix P2, wherein the source prefixes P1 and P2 are source prefixes in the same subnet.

Assuming that the network devices A, B, C, and D have all enabled the SAVNET function, the following describes the methods for generating a security table entry for the network devices A, B, C, and D respectively.

For the network device A, the network device A finds its own LSA1 from the LSDB, wherein the LSA1 comprises a source prefix P1 and an access tag 100 corresponding to the source prefix P1. Since the subnet where the source prefix P1 is located accesses an incoming interface A1 of the network device A, the network device A generates a security table entry comprising the source prefix P1 and the incoming interface A1. Further the network device A searches for other LSAs comprising the access tag 100 from the LSDB. Assuming that an LSA2 comprises a source prefix P2 and an access tag 100 corresponding to the source prefix P2, the P2 is added to the security table entry corresponding to the incoming interface A1. The security table entry generated by the network device A is shown in Table 4.

**Table 4**

| Source Prefix | Incoming Interface |
|---|---|
| P1,P2 | A1 |

For the network device D, the network device D finds its own LSA 3 from the LSDB, wherein the LSA3 comprises a source prefix P2 and an access tag 100 corresponding to the source prefix P2. Since the subnet where the source prefix P2 is located accesses an incoming interface D1 of the network device D, the network device D generates a security table entry comprising the source prefix P2 and the incoming interface D1. Further network device D searches for other LSAs comprising the access tag 100 from the LSDB. Assuming that the LSA4 comprises the source prefix P1 and the access tag 100 corresponding to the source prefix P1, the P1 is added to the security table entry corresponding to the incoming interface D1. The security table entry generated by the network device D is shown in Table 5.

**Table 5**

| Source Prefix | Incoming Interface |
|---|---|
| P1,P2 | D1 |

For the network device B, the network device B finds its own LSA5 from the LSDB, wherein the LSA5 comprises the connection information between the network devices B and A. Then the network device B searches for an LSA1 of the network device A from the LSDB, wherein the LSA1 comprises a source prefix P1 and an access tag 100 corresponding to the source prefix P1. Since the network device A accesses an incoming interface B1 of the network device B, the network device B generates a security table entry comprising the source prefix P1 and the incoming interface B1.

The network device B further the other LSAs comprising the access tag 100 from the LSDB. Assuming that an LSA2 comprises a source prefix P2 and an access tag 100 corresponding to the source prefix P2, the P2 is added to the security table entry corresponding to the incoming interface B1. The security table entry generated by the network device B is shown in Table 6.

**Table 6**

| Source Prefix | Incoming Interface |
|---|---|
| P1,P2 | B1 |

The network device C can further generate security table entries for the incoming interfaces C1 and C2 respectively with the same method. The security table entries generated by the network device C are shown in Table 7.

**Table 7**

| Source Prefix | Incoming Interface |
|---|---|
| P1,P2 | C1 |
| P1,P2 | C2 |

Based on the above security table entries, if the network device A receives a packet through the incoming interface A1, the source prefix of the source address of the packet being P2, the network device A can permit the packet based on the security table entry in Table 4. This can avoid the problem of erroneous interception when a subnet has multi-homing access to an AS domain, and can avoid erroneous interception in an asymmetric routing scenario.

It should be noted that in an example of the above examples, the P2P communication scenario in OSPF protocol is taken as an example, that is, the link state information is taken as an example of LSA. In the scenarios in other IGP protocols, the link state information is represented in a different form, referring to the relevant protocol provisions for details. For example, in the IS-IS protocol, the link state information can be LSP. Alternatively, the link state information in the example of the present application may be the connection relationship information of each network device compiled based on the LSDB data base, which is not limited in the example of the present application.

In some examples of the present application, the first network device is configured with an access tag on the incoming interface. On this basis, the method further comprises: searching for fourth link state information comprising the access tag from the link state data base, wherein the fourth link state information comprises a third source prefix corresponding to the access tag, and generating, for the incoming interface, a security table entry comprising an identifier of the incoming interface and the third source prefix.

The incoming interface may be any one incoming interface of the first network device that configured with an access tag. As an example, it is assumed that the subnet comprises a source prefix P3, and can have a dual-homed access to the first network device, wherein the first network device receives the link state information comprising the source prefix P3 from its own interface 1. In this case, the first network device may generate a security table entry for the interface 1 comprising the interface 1 and the source prefix P3. If the link state information further comprises an access tag 200 corresponding to the source prefix P3, and the interface 2 of the first network device is further configured with the access tag 200, the first network device can further generate a security table entry for the interface 2comprising the interface 2 and the source prefix P3.

In an example of the present application, before acquiring the target link state information from a link state data base, the first network device can receive a first packet sent by a network device in an AS domain, wherein the first packet comprises the target link state information, further the first network device stores the target link state information into the link state data base.

It can be understood that the first network device can learn the link state information of each network device in the AS domain, and store the link state information of each network device in the link state data base. Further the first network device obtains the path connectivity information according to the link state data base, that is, the connection relationship between the first network device and other network devices in the AS domain, and finds the target link state information based on the connection relationship, to generate a security table entry.

Wherein, the first packet is a packet to advertise the link state information. For example, it can be an LSP or LSA in the IGP protocol, and flooding of the source prefix can be achieved with the first packet.

In an example, the first packet comprises a first TLV comprising a first flag bit and an address prefix, wherein the first flag bit is to indicate that the address prefix is the first source prefix.

Wherein, the first TLV is a prefix TLV to carry the address prefix in the first packet. In an example of the present application, I bit of the Flags field of the first TLV can be occupied to carry the first flag bit. It is equivalent to extending the Flags field comprised in the prefix TLV to indicate whether the address prefix comprised in the prefix TLV is a source prefix to implement SAVNET.

In another example, the first packet comprises a second TLV comprising a first Sub-TLV, wherein the first Sub-TLV comprises a second flag bit, and the second flag bit is to indicate that the address prefix comprised in the second TLV is the first source prefix.

Wherein, the second TLV is the prefix TLV to carry the address prefix in the first packet. In an example of the present application, for the OSPF protocol, a first Sub-TLV can be added to the second TLV. The value field of the first Sub-TLV carries the second flag bit. For the IS-IS protocol, the first Sub-TLV is a prefix attribute flag Sub-TLV comprised in the prefix TLV, which can occupy 1 bit of the Flags field of the prefix attribute flag Sub-TLV to carry the second flag bit, which is equivalent to extending the Flags field to indicate whether the address prefix comprised in the prefix TLV is a source prefix to implement SAVNET. In subsequent examples, the source prefix to implement SAVNET will be referred to as the SAVNET source prefix for short.

In an example of the present application, both the first and second flag bit are SAVNET Flags, which is referred to as S-Flag below for short.

In the case that the subnet has a multi-homed access to the AS domain, both the first and second TLVs comprise a second Sub-TLV which comprises a tag field, wherein the tag field is to carry an access tag corresponding to a first source prefix. In an example of the present application, the access tag can be represented as SAVNET access tag, or as SAVNET access interface tag.

The following is an example based on a specific IGP protocol.

Take the IS-IS protocol as an example, a temporarily free bit in the Flags field of the prefix attribute flag Sub-TLV can be occupied to carry an S-Flag. When the value of the S-Flag is 1, it indicates that the address prefix in the prefix TLV is an SAVNET source prefix.

Wherein, the prefix attribute flag Sub-TLV is a Sub-TLV defined by the RFC7794 standard for carrying the IPv4/IPv6 extended accessibility attribute flag.

As shown in Figure 7, the prefix attribute flag Sub-TLV comprises Type, Length and Value. Wherein, the value of Type can be 4, the value of Length is the number of bytes of Value, and Value is (Length * 8) bits. Value carries the Flags field. Currently, the Flags field comprises X, R, and N. In the example of the present application, S-Flag can be added to the Flags field, which can be represented as "S" in Figure 7. "X" in Figure 7 represents X-Flag, which is an external prefix flag and indicates that the source prefix has been reallocated according to other protocols. "R" in Figure 7 represents R-Flag, which is a re-advertisement flag. "N" in Figure 7 represents N-Flag, which is a node flag.

Alternatively, the Sub-TLV can be extended in the prefix TLV, wherein the Sub-TLV carries the S-Flag. When the value of the S-Flag is 1, it indicates that the address prefix in the prefix TLV is an SAVNET source prefix.

In the case that the subnet has a multi-homed access to the AS domain, another Sub-TLV can be extended in the prefix TLV. The Sub-TLV carries an access tag. Wherein, the Type and Length of the Sub-TLV are both 1 byte, and the Value part is an access tag.

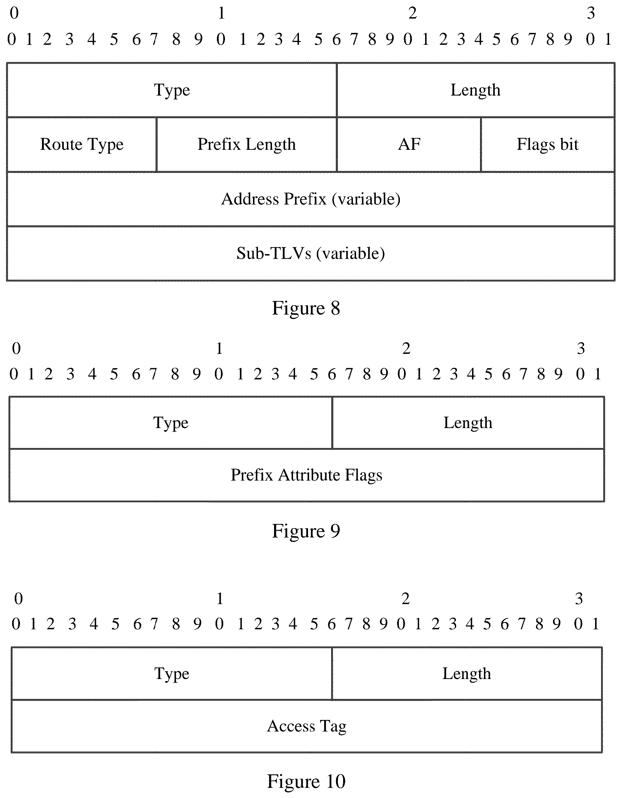

Taking the OSPFv2 as an example, the external prefix TLV of the OSPFv2 is shown in Figure 8, wherein the external prefix TLV comprises Type, Length, Route Type, Prefix Length, AF (address family), Flags, Address Prefix, and Sub-TLVs. Wherein, the Address Prefix and Sub-TLVs are both variable.

In one example, a temporarily free bit in the Flags field can be occupied to carry S-Flags. When the value of S-Flags is 1, it indicates that the address prefix in the external prefix TLV is a SAVNET source prefix.

In another example, a Sub-TLV is extended in the external prefix TLV, wherein the Sub-TLV carries S-Flags. When the value of S-Flags is 1, it indicates that the address prefix in the external prefix TLV is a SAVNET source prefix.

In the case that the subnet has a multi-homed access to the AS domain, another Sub-TLV can be extended in the external prefix TLV, wherein the Sub-TLV carries the access tag.

Wherein, the Type and Length of the Sub-TLV are both 2 bytes, and the Value part is the access tag.

Taking OSPFv3 as an example, a Sub-TLV can be added to the Intra-Area Prefix TLV, Inter-Area Prefix TLV, and External Prefix TLV of the OSPFv3, as shown in Figure 9, wherein the Sub-TLV comprises Type, Length, and Value, wherein Value carries Prefix Attribute Flags comprising S-Flag. When the value of S-Flag is 1, the address prefix in the prefix TLV to which the Sub-TLV belongs is an SAVNET source prefix.

In the case that the subnet has a multi-homed access to the AS domain, another Sub-TLV can be added to Intra-Area Prefix TLV, Inter-Area Prefix TLV, and External Prefix TLV, as shown in Figure 10, wherein the TLV comprises Type, Length, and Value, wherein Value carries the access tag.

It should be noted that each sub-TLV introduced in the examples of the present application is suitable for TLVs 135, 235, 236, and 237.

In another example, the first packet comprises a third TLV comprising the first source prefix.

Wherein, the third TLV is a new TLV added to the first packet in the examples of the present application for carrying the SAVNET source prefix.

In the case that the subnet has a multi-homed access to the AS domain, the third TLV comprises a second Sub-TLV comprising a tag field, wherein the tag field carries an access tag corresponding to the first source prefix; or the third TLV comprises an access tag corresponding to the first source prefix, the access tag being located in the tag field before the first source prefix and adjacent to the first source prefix.

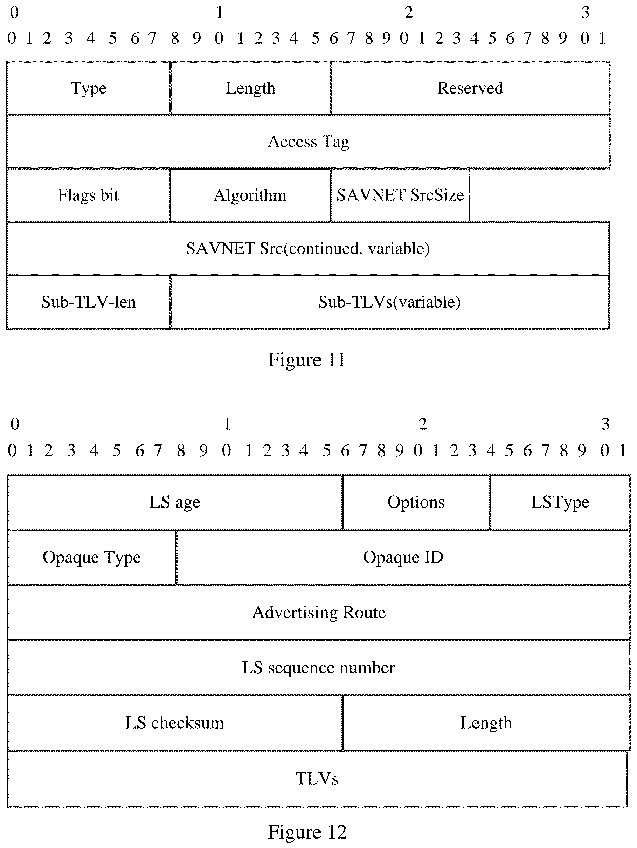

In the case that the IGP protocol is the IS-IS protocol, as shown in Figure 11, the third TLV comprises Type, Length, Reserved, access tag, Flags, Algorithm, SAVNET SrcSize, SAVNET Src, Sub-TLV-len, and Sub-TLVs. Wherein, the Sub-TLV is variable.

Wherein, SAVNET SrcSize indicates the length of SAVNET Src carried in the third TLV. SAVNET Src is the source prefix that needs to be advertised for SAVNET. SAVNET Src occupies the bit after SAVNET SrcSize and adjacent to SAVNET Src, and SAVNET Src is continued and variable, and the access tag is an access tag corresponding to SAVNET Src. The definition of other fields comprised in the third TLV follows the provisions of the IS-IS protocol, which will not be repeated here.

In the case that the IGP protocol is OSPFv2 protocol, if the first packet comprises the third TLV, it is required to extend the LSA. As shown in Figure 12, the LSA comprises LS age, Options, LS Type, Opaque Type, Opaque ID, Advertising Router, LS sequence number, LS checksum and Length, as well as TLVs. The meaning of each field complies with the provisions of the OSPFv2 protocol. In the example of the present application, the free bit in the Opaque Type can be occupied to indicate that the LSA comprises a new third TLV.

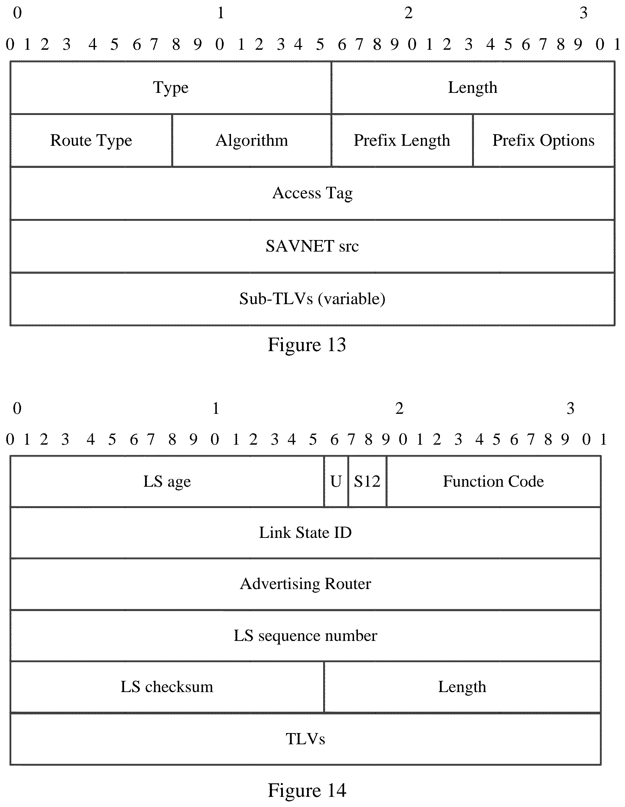

The format of the third TLV is shown in Figure 13, including Type, Length, Route Type, Algorithm, Prefix Length, Prefix Options, access tag, SAVNET src and Sub-TLV. Wherein, the length of SAVNET src is 4 octets. The Sub-TLV is variable.

In the case that the IGP protocol is OSPFv3 protocol, if the first packet comprises a third TLV, it is required to extend the LSA. As shown in Figure 14, the LSA comprises an LS age, U, S12, Function Code, Link State ID, Advertising Router, LS sequence number, LS checksum, and Length fields and TLVs. The meaning of each field complies with the provisions of the OSPFv3 protocol. In the example of the present application, the free bit in the Function Code can be occupied to indicate that the LSA comprises a new third TLV.

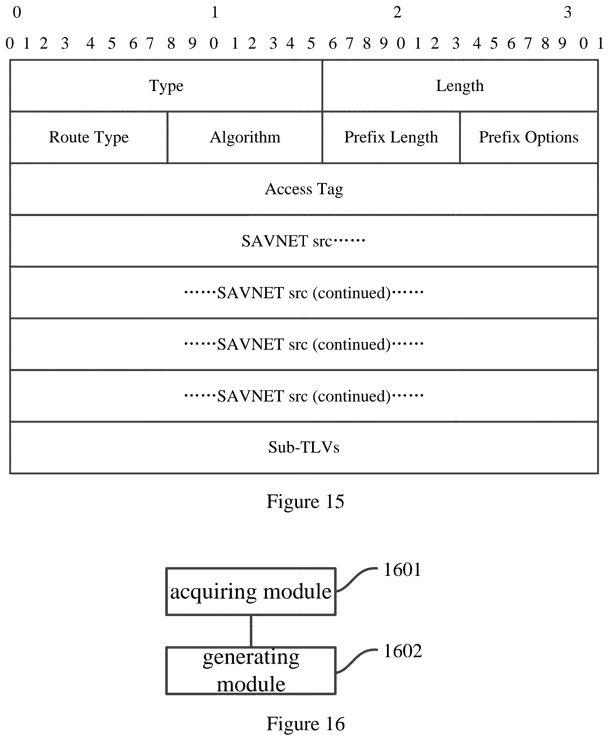

The format of the third TLV is shown in Figure 15, including Type, Length, Route Type, Algorithm, Prefix Length, Prefix Options, access tag, SAVNET src, and Sub-TLV. Wherein, SAVNET src occupies continued 16 octets.

Corresponding to the above method example, an example of the present application further provides an apparatus for generating a security table entry, which is applied to a first network device, wherein the first network device comprises a first interface, and the first interface is an incoming interface for receiving target link state information. As shown in Figure 16, the apparatus comprises:
an acquiring module 1601, to acquire target link state information from a link state data base, wherein the target link state information comprises a first source prefix;
a generating module 1602, to generate a security table entry for an incoming interface, wherein the security table entry comprises an identifier of the incoming interface and the first source prefix.

Optionally, the acquiring module 1601 is specifically to:
search for first link state information of the first network device from the link state data base, wherein the first link state information comprises a connection relationship between the first network device and at least one network device of a next level ;
set the next level as a current traverse level, and for each network device at the current traverse level, search for second link state information of the network device from the link state data base;
if the second link state information comprises the source prefix, set the second link state information as the target link state information;
if the second link state information comprises the connection relationship between the network device and the at least one network device of a next level , set the next level as the current traverse level;
repeat the process of, for each network device at the current traverse level, searching for second link state information of the network device from the link state data base, if the second link state information comprises the source prefix, setting the second link state information as the target link state information, and if the second link state information comprises the connection relationship between the network device and the at least one network device of a next level , setting the next level as the current traverse level, until it is determined that there is no network device of a next level for the network device at the current traverse level.

Optionally, the network device of a next level is a network device other than the first network device in an AS domain.

Optionally, the target link state information further comprises an access tag corresponding to the first source prefix;
the acquiring module 1601 is further to search for third link state information comprising an access tag from the link state data base, wherein the third link state information comprises a second source prefix corresponding to the access tag;
the generating module 1602 is further to add the second source prefix to the security table entry.

Optionally, the incoming interface is configured with an access tag;
the acquiring module 1601 is further to search for fourth link state information comprising an access tag from the link state data base, wherein the fourth link state information comprises a third source prefix corresponding to the access tag;
the generating module 1602 is further to generate, for the incoming interface, a security table entry comprising an identifier of the incoming interface and the third source prefix.

Optionally, the apparatus further comprises:
a receiving module, to receive a first packet sent by a network device in an AS domain, wherein the first packet comprises target link state information;
a storing module, to store the target link state information into the link state data base.

Optionally, the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises a second flag bit, and the second flag bit is to indicate that the address prefix comprised in the second TLV is the first source prefix; or,
the first packet comprises a third TLV comprising the first source prefix.

Optionally, the first, second, and third TLVs all comprise the second Sub-TLV comprising a tag field, wherein the tag field is to carry the access tag corresponding to the first source prefix; or,
the third TLV comprises an access tag corresponding to the first source prefix, the access tag being located in a tag field which is before the first source prefix and adjacent to the first source prefix.

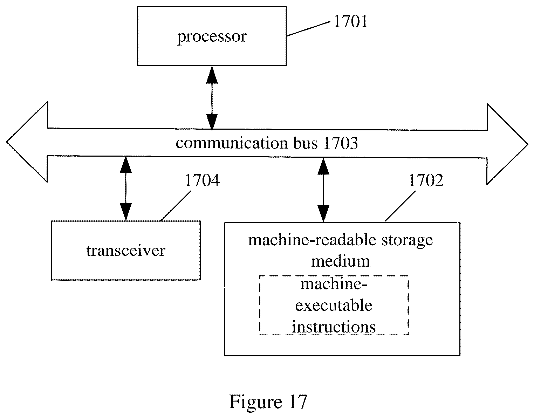

Corresponding to the above method example, an example of the present application further provides a first network device comprising a first interface, wherein the first interface is an incoming interface for receiving target link state information. As shown in Figure 17, the first network device comprises:
a processor 1701;
a transceiver 1704;
a machine-readable storage medium 1702, which stores machine-executable instructions that can be executed by the processor 1701 to cause the processor 1701 to:
   acquire target link state information from a link state data base, wherein the target link state information comprises a first source prefix;
   generate a security table entry for an incoming interface, wherein the security table entry comprises an identifier of the incoming interface and the first source prefix.

Optionally, the machine-executable instructions further cause the processor 1701 to:
search for first link state information of the first network device from the link state data base, wherein the first link state information comprises a connection relationship between the first network device and at least one network device of a next level ;
set the next level as a current traverse level, and for each network device at the current traverse level, search for second link state information of the network device from the link state data base;
if the second link state information comprises the source prefix, set the second link state information as the target link state information;
if the second link state information comprises the connection relationship between the network device and the at least one network device of a next level , set the next level as the current traverse level;
repeat the process of, for each network device at the current traverse level, searching for second link state information of the network device from the link state data base, if the second link state information comprises the source prefix, setting the second link state information as the target link state information, and if the second link state information comprises the connection relationship between the network device and the at least one network device of a next level , setting the next level as the current traverse level, until it is determined that there is no network device of a next level for the network device at the current traverse level.

Optionally, the network device of a next level is a network device other than the first network device in an AS domain.

Optionally, the target link state information further comprises an access tag corresponding to the first source prefix;
the machine-executable instructions further cause the processor 1701 to:
search for third link state information comprising an access tag from a link state data base, wherein the third link state information comprises a second source prefix corresponding to the access tag;
add the second source prefix to the security table entry.

Optionally, the incoming interface is configured with an access tag; the machine executable instructions further cause the processor 1701 to:
receive a first packet sent by a network device in an AS domain, wherein the first packet comprises target link state information;
store the target link state information into the link state data base.

Optionally, the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises a second flag bit, and the second flag bit is to indicate that the address prefix comprised in the second TLV is the first source prefix; or,
the first packet comprises a third TLV comprising the first source prefix.

Optionally, the first, second, and third TLVs all comprise the second Sub-TLV comprising a tag field, wherein the tag field is to carry the access tag corresponding to the first source prefix; or,
the third TLV comprises an access tag corresponding to the first source prefix, the access tag being located in a tag field which is before the first source prefix and adjacent to the first source prefix.

As shown in Figure 17, the first network device may further comprise a communication bus 1703. The processor 1701, the machine-readable storage medium 1702, and the transceiver 1704 communicate with each other through the communication bus 1703. The communication bus 1703 may be a Peripheral Component Interconnect (PCI) bus or an Extended Industry Standard Architecture (EISA) bus, etc. The communication bus 1703 can be divided into an address bus, a data bus, a control bus, and the like.

The transceiver 1704 may be a wireless communication module, and the transceiver 1704 performs data interaction with other devices under the control of the processor 1701.

The machine-readable storage medium 1702 may include a Random Access Memory (RAM), and may further include a Non-Volatile Memory (NVM), such as at least one magnetic disk memory. In addition, the machine-readable storage medium 1702 may further be at least one storage device located away from the aforementioned processor.

The processor 1701 may be a general-purpose processor, comprising a Central Processing unit (CPU), a Network Processor (NP), etc.; it may further be a Digital Signal Processor (DSP), an Application Specific Integrated Circuit (ASIC), a Field-Programmable Gate Array (FPGA) or other programmable logic devices, discrete gate or transistor logic devices, discrete hardware components.

Based on the same inventive concept, according to the method for generating a security table entry provided by the above-mentioned examples of the present application, an example of the present application further provides a machine-readable storage medium, which stores machine-executable instructions that can be performed by a processor to cause the processor to implement the above method for generating a security table entry.

In yet another example provided by the present application, a computer program product including instructions is further provided, which, when running on a computer, causes the computer to execute the method for generating a security table entry in the above examples.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but further includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus and the forwarding chip, the description is relatively simple because it is basically similar to the example of the method, and the relevant points can be referred to the partial description of the example of the method.

The above descriptions are only preferred examples of the present application, and are not intended to limit the present application. Any modifications, equivalent replacements, improvements and the like made within the spirit and principles of the present application shall be included within the scope of protection of the present application.

## Claims

1. A method for generating a security table entry, which is applied to a first network device, wherein the first network device comprises a first interface, and the first interface is an incoming interface for receiving target link state information, the method comprises:
acquiring the target link state information from a link state data base, wherein the target link state information comprises a first source prefix;
generating a security table entry for the incoming interface, wherein the security table entry comprises an identifier of the incoming interface and the first source prefix.

2. The method according to claim 1, wherein acquiring the target link state information from a link state data base comprises:
searching for first link state information of the first network device from the link state data base, wherein the first link state information comprises a connection relationship between the first network device and at least one network device of a next level ;
setting the next level as a current traverse level, and for each network device at the current traverse level, searching for second link state information of the network device from the link state data base;
if the second link state information comprises a source prefix, setting the second link state information as the target link state information;
if the second link state information comprises a connection relationship between the network device and at least one network device of a next level, setting the next level as the current traverse level;
repeating a process of, for each network device at the current traverse level, searching for second link state information of the network device from the link state data base, if the second link state information comprises the source prefix, setting the second link state information as the target link state information, if the second link state information comprises a connection relationship between the network device and at least one network device of a next level, setting the next level as the current traverse level, until it is determined that there is no network device of a next level for the network device at the current traverse level.

3. The method according to claim 2, wherein the network device of the next level is a network device other than the first network device in an AS domain.

4. The method according to claim 1, wherein the target link state information further comprises an access tag corresponding to the first source prefix; after generating a security table entry for the incoming interface, the method further comprises:
searching for third link state information comprising the access tag from the link state data base, wherein the third link state information comprises a second source prefix corresponding to the access tag;
adding the second source prefix to the security table entry.

5. The method according to claim 1, wherein the incoming interface is configured with an access tag; the method further comprises:
searching for fourth link state information comprising the access tag from the link state data base, wherein the fourth link state information comprises a third source prefix corresponding to the access tag;
generating, for the incoming interface, a security table entry comprising an identifier of the incoming interface and the third source prefix.

6. The method according to claim 1, wherein before acquiring target link state information from a link state data base, the method further comprises:
receiving a first packet sent by a network device in an AS domain, wherein the first packet comprises the target link state information;
storing the target link state information in the link state data base.

7. The method according to claim 6, wherein,
the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises a second flag bit, and the second flag bit is to indicate that the address prefix comprised in the second TLV is the first source prefix; or,
the first packet comprises a third TLV comprising the first source prefix.

8. The method according to claim 7, wherein,
each of the first TLV, the second TLV and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

9. An apparatus for generating a security table entry, which is applied to a first network device, wherein the first network device comprises a first interface, and the first interface is an incoming interface for receiving target link state information, the apparatus comprises:
an acquiring module, to acquire the target link state information from a link state data base, wherein the target link state information comprises a first source prefix;
a generating module, to generate a security table entry for an incoming interface, wherein the security table entry comprises an identifier of the incoming interface and the first source prefix.

10. The apparatus according to claim 9, wherein the acquiring module is specifically to:
search for first link state information of the first network device from the link state data base, wherein the first link state information comprises a connection relationship between the first network device and at least one network device of a next level ;
set the next level as a current traverse level, and for each network device at the current traverse level, search for second link state information of the network device from the link state data base;
if the second link state information comprises a source prefix, set the second link state information as the target link state information;
if the second link state information comprises a connection relationship between the network device and at least one network device of a next level , set the next level as the current traverse level;
repeat a process of, for each network device at the current traverse level, search for second link state information of the network device from the link state data base, if the second link state information comprises the source prefix, set the second link state information as the target link state information, if the second link state information comprises a connection relationship between the network device and at least one network device of a next level, set the next level as the current traverse level, until it is determined that there is no network device of a next level for the network device at the current traverse level.

11. The apparatus according to claim 10, wherein the network device of a next level is a network device other than the first network device in an AS domain.

12. The apparatus according to claim 9, wherein the target link state information further comprises an access tag corresponding to the first source prefix;
the acquiring module is further to search for third link state information comprising the access tag from the link state data base, wherein the third link state information comprises a second source prefix corresponding to the access tag;
the generating module is further to add the second source prefix to the security table entry.

13. The apparatus according to claim 9, wherein the incoming interface is configured with an access tag;
the acquiring module is further to search for fourth link state information comprising the access tag from the link state data base, wherein the fourth link state information comprises a third source prefix corresponding to the access tag;
the generating module is further to generate, for the incoming interface, a security table entry comprising an identifier of the incoming interface and the third source prefix.

14. The apparatus according to claim 9, further comprising:
a receiving module, to receive a first packet sent by a network device in an AS domain, wherein the first packet comprises the target link state information;
a storing module, to store the target link state information in the link state data base.

15. The apparatus according to claim 14, wherein,
the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises a second flag bit, and the second flag bit is to indicate that the address prefix comprised in the second TLV is the first source prefix; or,
the first packet comprises a third TLV comprising the first source prefix.

16. The apparatus according to claim 15, wherein,
each of the first TLV, the second TLV and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

17. A first network device, wherein the first network device comprises a first interface, the first interface is an incoming interface for receiving target link state information, and the first network device comprises:
a processor;
a transceiver;
a machine-readable storage medium, which stores machine-executable instructions that are executed by the processor to cause the processor to:
acquire the target link state information from a link state data base, wherein the target link state information comprises a first source prefix;
generate a security table entry for the incoming interface, wherein the security table entry comprises an identifier of the incoming interface and the first source prefix.

18. The first network device according to claim 17, wherein the machine-executable instructions further cause the processor to:
search for first link state information of the first network device from the link state data base, wherein the first link state information comprises a connection relationship between the first network device and at least one network device of a next level ;
set the next level as the current traverse level, and for each network device at the current traverse level, search for second link state information of the network device from the link state data base;
if the second link state information comprises a source prefix, set the second link state information as the target link state information;
if the second link state information comprises a connection relationship between the network device and at least one network device of a next level , set the next level as the current traverse level;
repeat a process of, for each network device at the current traverse level, search for second link state information of the network device from the link state data base, if the second link state information comprises the source prefix, set the second link state information as the target link state information, if the second link state information comprises a connection relationship between the network device and at least one network device of a next level, set the next level as the current traverse level, until it is determined that there is no network device of a next level for the network device at the current traverse level.

19. The first network device according to claim 18, wherein the network device of a next level is a network device other than the first network device in an AS domain.

20. The first network device according to claim 17, wherein the target link state information further comprises an access tag corresponding to the first source prefix;
the machine-executable instructions further cause the processor to:
search for third link state information comprising the access tag from the link state data base, wherein the third link state information comprises a second source prefix corresponding to the access tag;
add the second source prefix to the security table entry.

21. The first network device according to claim 17, wherein the incoming interface is configured with an access tag; the machine executable instructions further cause the processor to:
search for fourth link state information comprising the access tag from the link state data base, wherein the fourth link state information comprises a third source prefix corresponding to the access tag;
generate, for the incoming interface, a security table entry comprising an identifier of the incoming interface and the third source prefix.

22. The first network device according to claim 17, wherein the machine-executable instructions further cause the processor to:
receive a first packet sent by a network device in an AS domain, wherein the first packet comprises the target link state information;
store the target link state information in the link state data base.

23. The first network device according to claim 22, wherein:
the first packet comprises a first TLV comprising a first flag bit and an address prefix, wherein the first flag bit is to indicate that the address prefix is the first source prefix; or,
the first packet comprises a second TLV comprising an address prefix and a first Sub-TLV, wherein the first Sub-TLV comprises a second flag bit, and the second flag bit is to indicate that the address prefix comprised in the second TLV is the first source prefix; or,
the first packet comprises a third TLV comprising the first source prefix.

24. The first network device according to claim 23, wherein,
each of the first TLV, the second TLV and the third TLV comprises a second Sub-TLV comprising a tag field, wherein the tag field is to carry an access tag corresponding to the first source prefix; or,
the third TLV comprises an access tag corresponding to the first source prefix, and the access tag is located in a tag field before the first source prefix and adjacent to the first source prefix.

25. A machine-readable storage medium, which stores machine-executable instructions that, when called and executed by a processor, cause the processor to implement the method according to any one of claims 1 to 8.

26. A computer program product, which causes a processor to implement the method according to any one of claims 1 to 8.
